# EUROPEAN PATENT APPLICATION

(11) **EP 0 575 127 A2**
(43) Date of publication of application: **22.12.1993**
(21) Application number: 93304593.2
(22) Date of filing: 14.06.1993
(51) Int. Cl.: G06F 9/445

(54) **A method of providing a resident program part of a terminate and stay resident program**

(30) Priority: 17.06.1992 GB 9212892
(71) Applicant: TEXAS INSTRUMENTS INCORPORATED, Dallas Texas 75265 (US); TEXAS INSTRUMENTS LIMITED, Bedford MK41 7PA (GB)
(72) Inventor: Short, Graham B., Bedford MK41 8AX (GB)
(74) Representative: Abbott, David John

(57) **Abstract**

A method of providing a resident part of a terminate and stay resident program makes use of a specially structured terminate and stay resident program which contains within it all the code and data necessary to form a member of different resident parts each of which is suitable for a different type of central processing unit. When the program is executed on a computer the type of central processing unit in the computer is identified and a suitable resident part is selected. The selected resident part is then assembled from the code and data contained in the terminate and stay resident program and is installed as the resident part so that it can be made use of subsequently by the operating system present in the computer or by an application program.

## Description

The present invention relates to a method of executing a computer program in a computer where the computer has one of a number of different possible central processing units (microprocessors). A particular type of computer program with which the invention is concerned is that known as a terminate and stay resident program.

Terminate and stay resident programs are used to provide in the memory of a computer some resident code that can subsequently be called by the operating system or an application program. The function provided by the resident code could be, for example, to drive a peripheral unit.

Terminate and stay resident programs when loaded into the computer and run for the first time execute a number of initial operations that ensure that the resident code is available in memory to be subsequently called by the operating system or an application program. Typically the initial operations include reserving memory space for the resident code so that it is not overwritten later by other programs when they are entered or during their execution, and providing some means of enabling the execution address or addresses of the resident code to be made available to the operating system or an application program that wishes to call the resident code.

Having developed a terminate and stay resident program, which, for example, drives a particular make of printer, it is common to provide that program on a carrier (e.g. a floppy disc) in a number of different versions suitable for use with computers having different central processing units. This causes a problem for users of the program since they have to select the appropriate version from those on the carrier for their particular computer system, and the user may not know exactly which central processing unit is in his computer system and consequently which version to select.

It is an object of the present invention to relieve the user of the need to make that choice, by enabling a single version of the program to be run on computer systems having any of a number of different central processing units.

According to the present invention there is provided a method of providing a resident program part of a terminate and stay resident program, in a computer having memory means and a particular type of central processing unit, the terminate and stay resident program including
an initialisation program part, and
a plurality of different resident program parts each of the plurality of different resident program parts being arranged to be correctly executable by each of a plurality of different types of central processing units respectively,
the method including
entering the terminate and stay resident program into the memory means of the computer and executing its initialisation part, that execution causing the computer to perform a number of operations including,
providing an indication of the identity of the particular central processing unit in the computer,
selecting that one of the plurality of resident program parts that is arranged to be correctly executable by the type of central processing unit identified as being in the computer, and
preserving the selected resident program part in the memory means of the computer.

Each of the different resident program parts may be present as such within the terminate and stay resident program or may be assembled from an appropriate selection from a number of program blocks.

The program blocks may contain program code or data or both and at least some program blocks may be common to two or more resident program parts.

The memory reserved for the selected program part may be at one end of the space in the memory means to which the terminate and stay resident program was entered.

There will now be described, by way of example only, a method of providing in a computer a resident program part of a terminate and stay resident program. Reference will be made to the accompanying drawings of which:-
FIGURE 1 shows an example of a terminate and stay resident program specially structured for use with a method according to the present invention;
FIGURE 2 illustrates how it is necessary to reserve only the memory required for the selected resident program part.
FIGURE 3 shows another example of a specially structured terminate and stay resident program; and
FIGURE 4 shows the assembly of the selected resident program part from a number of program blocks.

A method according to the present invention makes use of a terminate and stay resident (TSR) program that has within it an initialisation program part and a number of different resident program parts. Each of the resident program parts is designed to be executed by a different type of central processing unit. On the other hand, the initialisation program part can be executed by any of those central processing units. After running the initialisation program part of the TSR program leaves in a computer only that one of the different resident program parts that is designed to be executed by the particular type of central processing unit that is present in the computer. The initialisation program part is terminated after it has been run.

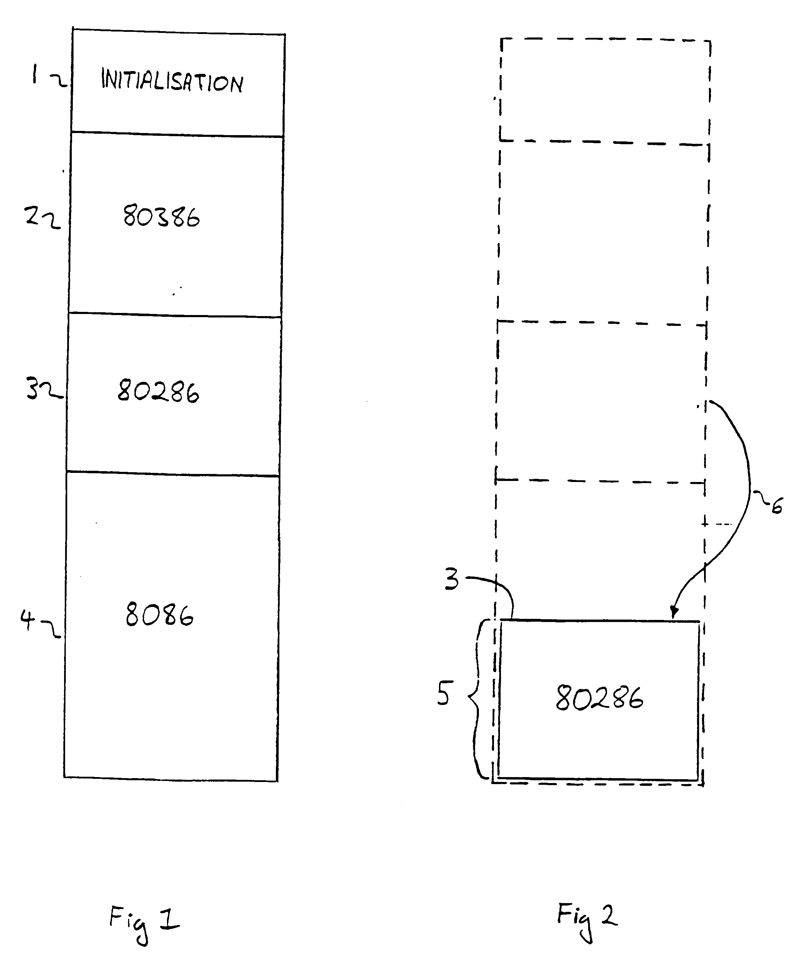

Figure 1 shows an example of a TSR program that is designed to work with a computer having an 8086, an 80286 or an 80836 microprocessor as its central processing unit. The program has an initialisation program part 1 and three program blocks 2,3,4, containing reusable programs that are specially designed for the 80386, 80286 and 8086 microprocessors respectively. Each program block contains all the data necessary, in the correct order, for the block to be used as the resident program part that is left behind by the method after running the initialisation program part.

The instruction sets of the three different microprocessors are to some extent compatible in that code written for the 8086 can also be executed by the 80286 and the 80386. Use is made of that fact in the design of the initialisation program part which can be executed by all three microprocessors.

To use the TSR program the user loads the program into a computer having one of the three microprocessors as its central processing unit and executes the initialisation part. Normally both those operations will be carried out for the user by the operating system of the computer when he gives a command to the operating system to execute a file containing the TSR program.

The execution of the initialisation part causes a number of operations to be performed by the computer including identifying the type of microprocessor in the computer, selecting the particular program block that is designed for that microprocessor and installing the selected block as the resident program part, so that it can be used and reused by the operating system or an application program after the execution of the initialisation segment has terminated. The program blocks that are not selected are no longer required and are either deliberately erased from the memory of the computer or the locations in the memory where they are stored are left unprotected from being overwritten.

Selecting a specially designed resident program part has the advantage over providing a general resident program part that can be executed by any of a contemplated group of central processing units that each specially designed resident program part can make full use of any instructions which are specific to the particular central processing unit for which it is intended, thereby enabling each resident program part to be optimised.

Another alternative to selecting one of a number of separate resident program parts to be installed as the resident program is to provide a single resident program part that consists of a number of portions some of which can be executed by any of the central processing units and others of which are designed for execution by only one type of central processing unit. On execution by a computer the initialisation part identifies the type of central processing unit present in the computer and selects the portions that can be executed by the particular type of processing unit identified. The selected portions are collected together to form the resident program and the remaining portions are either discarded or allowed to be overwritten.

A method according to the present invention has the advantage that it is necessary to reserve only enough memory for the selected resident program part. Figure 2 shows how this can be applied to the example of Figure 1. The case illustrated is one in which the type of microprocessor present within the computer is identified as being an 80286. In the figure, the space in the memory in which the TSR program is loaded is marked by a dashed line. When the microprocessor has been identified as being of the type 80286 memory space appropriate to that type is reserved at 5 at the lower end of the part of memory occupied by the TSR program as a whole. That would for example make the reserved memory 5 contiguous with other reserved memory below the program. Next the 80286 program block 3 is copied 6 into the reserved memory space 5. As an alternative the segment could be copied first and the memory space reserved afterwards.

It can be seen that once the execution of the initialisation segment has terminated the memory above the memory space 5 reserved for the 80286 program block is free for other uses.

Of course, if the microprocessor of the computer were only of type 8086, reservation of memory space would have been required and copying of the segment would not have been required, because the 8086 program block is already in the desired location.

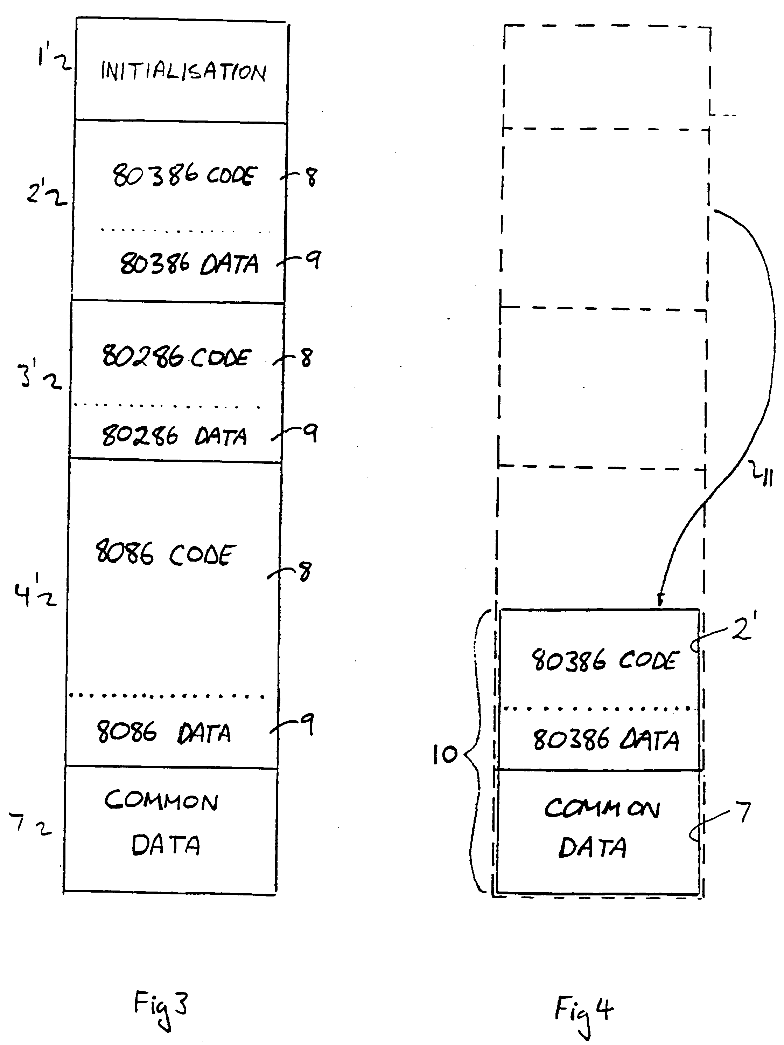

In the above example there is a simple correspondence between the three program blocks for the three different types of microprocessors and the three resident program parts; in fact the three program blocks are the same as the three program parts. That will not always be so, as will be seen below in the discussion of Figures 3 and 4. Because the program blocks and the program parts are the same it is a simple matter to arrange for the selected resident program part left behind after the execution of the initialisation part to be in the correct order with all the code and data that it requires.

The data required for the operation of a particular resident program part, when selected, may be different from that required by the other program parts. If that were the case in the example of Figure 1, it would be convenient to include in each of the three program blocks the data that it requires so that, when necessary, the program block can be moved as a whole, that is, including code and data.

However, it may be that some of the data is common to more than one resident program part. In that case it may be convenient to have the common data in a separate program block that is always installed as part of the selected resident program part. This is illustrated in Figures 3 and 4.

Figure 3 shows another example of a TSR program. The program is divided into five parts: an initialisation program part, three program blocks 2',3',4' to be executed by 80386, 80286 and 8086 microprocessors respectively and a common data program block 7. Each of the three program blocks 2',3',4' is shown as having both a code part 8 and a data part 9.

This program is used by a method according to the present invention in a similar way to that of Figure 1. When the TSR program is loaded and the initialisation program part 1' is executed, the type of microprocessor present in the computer is identified. As an example it will be taken that it is identified as being of the type 80386. Figure 4 illustrates the subsequent steps taken. First, memory space 10 is reserved for the common data program block 7 and the 80386 program block 2'. The memory space reserved is located at, for example, the lower end of the region occupied by the TSR program as a whole. The 80386 program block 2' is then moved as indicated by the arrow 11 into the reserved memory space 10 above the common data program block 7 which is already in position in the reserved memory space 10. Again it would, of course, be possible to move the 80386 program block 2' before reserving the memory space 10.

As explained above, although it is possible for there to be a simple one to one relationship between the different resident program parts, contained within a TSR program for use with a method according to the present invention, and the program blocks into which the TSR program is divided, it is not necessary for that to be the case. In some circumstances it may be more convenient to assemble a resident program part from a number of program blocks in the TSR program only when that particular part is selected. Some or all of those program blocks can also be used to make up others of the resident program parts when those program parts are selected. It is, of course, likely that certain usable program blocks consist of only one of the program parts.

Whatever the organisation of the program blocks there will usually be some that are not used in the selected resident program part. After the execution of the initialisation part terminates only the selected resident program part is of any further use and is located in reserved memory space. That leaves the remaining unreserved space in the memory of the computer free for other uses. In Figures 2 and 4 the memory left free is the area in dashed outline that is not occupied by the selected resident program part.

Although as described above the memory space 5,10 being reserved lies within the region in the memory of the computer occupied by the original TSR program as a whole, it would be possible for the space to be reserved elsewhere in the memory.

A method according to the present invention requires the type of central processing unit present within a computer to be identified. In many cases it will be possible to differentiate between types of central processing units by examining their responses to certain instruction codes. An example of how that may be done for the 8086, 80286 and 80386 microprocessors is given on pages 167 to 182 of "Inside DOS : A programmer's guide" by Michael J. Young and published by SYBEX.

The resident part of a TSR program is commonly called via an interrupt, the initialisation program part changing a vector or vectors held by the operating system to point to the execution address or execution addresses of the resident part. If a resident program part is to provide a large number of functions in respect of a single vector it is a common technique for the resident program part to respond to an interrupt entry via that vector by returning the address of a jump table. The jump table gives the execution addresses within the resident program of routines performing each of the functions; this allows those routines to be called quickly and easily after an initial use of the interrupt.

Such a jump table is an example of the data that could be contained within a program block and the routines are examples of code contained within program blocks. It may not be worthwhile rewriting simple ones of those routines for all the processors and these could be left as single versions in a program block common to all the different resident program parts.

## Claims

1. A method of providing a resident program part of a terminate and stay resident program, in a computer having memory means and a particular type of central processing unit, the terminate and stay resident program including
an initialisation program part, and
a plurality of different resident program parts each of the plurality of different resident program parts being arranged to be correctly executable by at least one of a plurality of different types of central processing units respectively,
the method including
entering the terminate and stay resident program into the memory means of the computer and executing its initialisation part, that execution causing the computer to perform a number of operations including,
providing an indication of the identity of the particular central processing unit in the computer,
selecting that one of the plurality of resident program parts that is arranged to be correctly executable by the type of central processing unit identified as being in the computer, and
preserving the selected resident program part in the memory means of the computer.

2. A method according to claim 1 wherein at least one of the plurality of different resident program parts includes a plurality of program blocks and the method further includes assembling the program blocks forming the selected resident program in correct order.

3. A method according to claim 2 wherein at least one program block includes program code.

4. A method according to claim 2 or claim 3, wherein at least one program block includes data.

5. A method according to any one of claims 2 to 4, wherein at least one program block is included in two or more of the plurality of different resident program parts.

6. A method according to any one of the preceding claims, wherein the method includes arranging for the selected program part to be at one end of the space in the memory means in which the terminate and stay resident program was stored.

7. A computer having as its central processing unit one of a plurality of different types of central processing unit, and also including memory means, input means, output means,
and means for deriving from the central processing unit an indication of its type,
the input means receiving signals representing a terminate and stay resident program so as to cause the computer to store that program in the memory means, the program including an initialisation program part arranged to be correctly executable by any one of the plurality of different types of central processing unit and a plurality of different resident program parts each being arranged to be correctly executable by at least one of the plurality of different types of central processing unit, so that for any given one of the plurality of central processing units there is at least one of the resident program parts that is correctly executable by it,
and the computer further including means responsive to the indication of the type of central processing unit from the deriving means and the initialisation program part to cause the retention in the memory means of only that or those resident program parts that can be executed correctly by the particular type of central processing unit represented by the indication,
and means responsive to the stored addresses to cause the retention in the memory means of the resident program part or parts that can be executed correctly by the particular type of central processing unit and to release for storing other data the addresses in the memory means of other resident program parts.
